# EUROPÄISCHE PATENTANMELDUNG

(11) **EP 0 924 116 A1**
(43) Veröffentlichungstag der Anmeldung: **23.06.1999**
(21) Anmeldenummer: 98122990.9
(22) Anmeldetag: 03.12.1998
(51) Int. Cl.: B60H 3/06, B01D 53/06

(54) **Vorrichtung zur Beseitigung von Schad- und Geruchsstoffen aus einem Luftstrom**

(30) Priorität: 19.12.1997 DE 19756662
(71) Anmelder: DaimlerChrysler AG, 70567 Stuttgart (DE)
(72) Erfinder: Kunz, Sabine, 81673 München (DE); Ertl, Harald, 82538 Geretsried (DE); Odebrecht, Wolfgang, 71067 Sindelfingen (DE); Siegel, Gunter, 72160 Horb (DE); Kelz, Michael, 71134 Aidlingen (DE)

(57) **Zusammenfassung**

Zur Beseitigung von Schad- und Geruchsstoffen aus einem einem Fahrzeuginnenraum zuzuführenden Luftstrom ist ein endloses, über zwei parallele Trommeln umlaufendes Filterband vorgesehen, das aus einem aus Kohlenstofffasern gebildeten textilen Material besteht.

## Beschreibung

Die Erfindung bezieht sich auf eine Vorrichtung zur Beseitigung von Schad- und Geruchsstoffen aus einem einem Fahrzeuginnenraum zuzuführenden Luftstrom nach dem Oberbegriff des Anspruchs 1.

Derartige Vorrichtungen sind bekannt (DE 39 35 656 A1, DE 41 29 069 A1, DE 195 46 672 A1). Als Adsorptionsmittel wird nach DE 41 29 069 A1 und nach DE 195 46 672 A1 teilchenförmige Aktivkohle verwendet. Durch das umlaufende Filterband mit der sich ständig regenerierenden Aktivkohle ist eine derartige Vorrichtung praktisch zeitlich unbegrenzt einsetzbar. Nach DE 41 29 069 A1 wird die teilchenförmige Aktivkohle beispielsweise zwischen Zwei offenporigen Gestricklagen angeordnet, und nach DE 195 46 672 A1 auf ein offenporiges Band aufgeklebt. Nach DE 39 35 656 A1 wird als Filtermaterial ein Gestrick u.a. aus "Kohle" verwendet.

Um die Druckverluste beim Durchtritt des Luftstroms durch das Filterband zu minimieren und um eine vollständige Desorption zu erzielen, muß die Menge des Adsorptionsmittels begrenzt werden. Insbesondere bei einer hohen Schad- und Geruchsstoffbelastung des zu reinigenden Luftstroms reicht diese Menge nicht aus, um eine vollständige Adsorption der Schad- und Geruchsstoffe sicherzustellen. Ferner hat sich gezeigt, dass die Wirksamkeit der bekannten Vorrichtungen bei einer Reihe von Schad- und Geruchstoffen, z.B. niedrigen Alkoholen oder Mercaptanen zu wünschen übrig läßt.

Aus GB 1 310 011 und DE 196 47 366 A1 ist ein aus Kohlenstofffasern gebildetes Gewebe bekannt, das durch Oxidation eines Gewebes aus regenerierten Cellulosefasern hergestellt wird.

Aufgabe der Erfindung ist es, eine Vorrichtung zur Beseitigung von Schad- und Geruchsstoffen aus einem einem Fahrzeuginnenraum zuzuführenden Luftstrom mit einem umlaufenden, sich ständig regenerierenden Filterband bereitzustellen, welche auch bei einer hohen Schad- und Geruchsstoffbelastung eine vollständige Beseitigung dieser Stoffe aus dem zu reinigenden Luftstrom gewährleistet.

Dies wird erfindungsgemäß mit der im Anspruch 1 gekennzeichneten Vorrichtung erreicht. In den Unteransprüchen sind vorteilhafte Ausgestaltungen der Erfindung wiedergegeben.

Vorzugsweise wird als Filterband ein textiles Material verwendet, das aus Kohlenstofffasern gebildet ist.

Derartige Fasern weisen eine Dicke von wenigen µm, beispielsweise 1 bis 30 µm auf. Im Gegensatz zu den körnigen Aktivkohleteilchen auf oder in dem Filterband, wie sie nach dem Stand der Technik verwendet werden, wird dadurch eine homogene Struktur des Adsorptionsmittels bei kurzen Diffusionswegen ins Innere des Adsorptionsmittels und damit eine hervorragende Adsorptionskinetik erzielt, die zu einer quantitativen Adsorption der Schad- und Geruchsstoffe in der zu reinigenden Luft bei geringem Luftdurchtrittswiderstand des Filterbandes bei niedrigen und auch bei hoher Schad- und Geruchsstoffbelastung führt.

Die Kohlenstofffasern können durch Pyrolyse und/oder Oxidation von beliebigen vollsynthetischen, halbsynthetischen oder natürlichen Fasern gebildet sein. Vorzugsweise wird das textile Material aus Kohlenstofffasern durch Oxidation eines textilen Materials aus vollsynthetischen oder halbsynthetischen Fasern hergestellt. Das so hergestellte textile Material aus Kohlenstofffasern weist nämlich eine besonders hohe Mikroporosität und damit eine besonders hohe Adsorptionsgeschwindigkeit für die Schad- und Geruchsstoffmoleküle in der zu reinigenden Luft auf.

Als besonders geeignet hat sich für die erfindungsgemäße Vorrichtung ein aus Kohlenstofffasern hergestelltes textiles Material erwiesen, das durch Oxidation eines textilen Materials aus regenerierten Cellulosefasern gebildet ist, beispielsweise aus Viskoseseide. Die Herstellung eines solchen aus Kohlenstofffasern bestehenden Gewebes ist beispielsweise in GB 1 310 011 beschrieben.

Statt aus einem Gewebe kann das textile Material beispielsweise auch aus einem Gewirke oder einem Filz bestehen. Auch kann es als Nadelfilz oder Nadelfloor ausgebildet sein, und zwar auf einem Trägermaterial, wie einem warmfesten Gewebe z.B. aus Aramid-Fasern oder einem Gewebe aus Kohlenstofffasern. Auch Velourgewebe ist möglich. Das Gewebe kann ein 2D-Gewebe sein, oder ein 3D-Gewebe, also ein mehrschichtiges Gewebe, das durch auch in der Hochachse verlaufende Fasern zusammengehalten wird. Insbesondere hat sich ein Köper-Gewebe als geeignet erwiesen, da es eine relativ große Verformbarkeit aufweist.

Um die Dehnung in Bandlängsrichtung zu begrenzen, können die Kettfäden des Gewebes dicker als die Schußfäden ausgebildet sein. Auch können zur Verstärkung des Filterbandes in Längsrichtung zusätzliche Verstärkungsfäden eingearbeitet oder Streifen vorgesehen sein, auf denen das textile Kohlenstofffasermaterial befestigt ist.

Um eine Größenänderung des Adsorptionsbandes durch thermische oder mechanische Belastung oder Alterung zu verhindern, kann das Adsorptionsband vorzugsweise durch eine zweidimensionale offene Netzstruktur, bestehend aus Glasfaserfäden in seinen Abmessungen fixiert werden.

Zur Vergrößerung der durchströmten Bandfläche kann das Kohlenstofffasergewebe so befestigt sein, dass ein plissiertes und/oder gefaltetes Band um die Umlenkrollen geführt wird. Dies reduziert die Anströmgeschwindigkeit und dadurch den Druckverlust.

Das Filterband kann einlagig oder in mehreren Lagen eingesetzt werden.

Erfindungsgemäß ist im Luftstrom stromaufwärts des umlaufenden Filterbandes eine Zone vorgesehen, in der vom Filterband nicht adsorbierbare Schad- und Geruchsstoffe adsorbiert und/oder in vom Filterband adsorbierbare Stoffe umgewandelt werden.

So weist ein Filterband aus Kohlenstofffasern zwar für die meisten Schad- und Geruchsstoffe in einem einem Fahrzeuginnenraum zuzuführenden Luftstrom eine hervorragende Adsorptionskinetik auf, insbesondere für Aromaten, wie die sogenannten BTX-Stoffe (Benzol, Toluol, Xylol), für kondensierte Aromaten oder für cykloaliphatische Verbindungen, wie Terpene, sowie für andere Kohlenwasserstoffe, insbesondere Benzinkohlenwasserstoffe. Bestimmte Schad- und Geruchsstoffe werden von Kohlenstofffasern jedoch relativ schlecht adsorbiert. Dazu zählen beispielsweise niedrige Alkohole, wie Methanol, Äthanol oder Propanol, organische Schwefelverbindungen, wie z.B. Mercaptane.

Ein Teil dieser Stoffe wird von dem Filterband allerdings besser adsorbiert, wenn sie zu größeren Molekülen umgesetzt oder in anderer Weise umgewandelt worden sind, beispielsweise Mercaptane durch Dimerisierung z.B. zu Dialkyldisulfiden, oder durch Oxidation von NO zu NO₂.

Demgemäß kann diese Zone zur chemischen Umwandlung niedrig molekularer Stoffe beispielsweise einen Oxidationskatalysator zur Oxidation dieser Stoffe an der Luft und/oder ein Oxidationsmittel, beispielsweise ein Jodat, ein Molybdat oder dergleichen aufweisen, vorzugsweise auf einem Träger. Damit auch solche Schad- und Geruchsstoffe von der erfindungsgemäßen Vorrichtung zurückgehalten werden, die weder von den Kohlenstofffasern adsorbiert, noch in dieser Zone in durch die Kohlenstofffasern adsorbierbare Stoffe umgewandelt werden, kann diese dem Filterband vorgeordnete Zone für derartige Schad- und Geruchsstoffe noch ein Adsorptionsmittel, z.B. Zeolithe, aufweisen.

Auch können in dieser, dem Filterband vorgeschalteten Zone reaktive Schichten aus Aktivkohle, Zeolithe, Polymeradsorber oder Silicagele vorgesehen sein, um Konzentrationsspitzen an Schad- und Geruchsstoffen in dem zu reinigenden Luftstrom zu glätten.

Um das mit Schad- und Geruchsstoffen belastete Filterband zu regenerieren, durchläuft es mindestens eine Desorptionszone, in der die Schad- und Geruchsstoffe desorbiert werden. Die Desorptionszone ist vorzugsweise im Bereich der Trommeln vorgesehen, über die das Filterband läuft. Auch kann an beiden Trommeln jeweils eine Desorptionszone vorgesehen sein.

Die Desorption kann beispielsweise durch Strahlung, z.B. mit einem IR-Strahler erfolgen, zumal Z.B. ein Kohlenstofffaserband eine hohe IR-Strahlenabsorptionsfähigkeit besitzt. Auch kann aufgrund der elektrischen Leitfähigkeit bei einem Kohlenstofffaserband eine Widerstandsheizung vorgesehen sein, die sich über einen Abschnitt des Kohlenstofffaserbandes erstreckt. Auch ist ein Kohlenstofffaserband induktiv heizbar.

Das Filterband kann aber auch durch eine Luftheizung indirekt erhitzt werden. Die Desorptionsluft wird hierzu erwärmt, bevor sie auf das Filterband trifft. Hierzu kann eine elektrische Heizung, z.B. eine Heizwendel zwischen Adsorptions- und Desoprtionszone eingebaut sein. Vorzugsweise wird aber die Umlenkrolle beheizt und so ausgebildet, dass sie von der Desorptionsluft radial durchströmt wird und sich dabei die Luft aufheizt.

Die Heizung für die Umlenkrolle befindet sich dabei in der Rotationsachse der Umlenkrolle.

Die Desorptionsluft strömt also vom Luftdurchtrittsbereich durch die Umlenkrolle und tritt durch das Filterband auf der gegenüberliegenden Seite unter Erwärmung des Filterbandes aus.

Als besonders vorteilhaft hat es sich jedoch erwiesen, zur thermischen Desorption der adsorbierten Schad- und Geruchsstoffe von dem Filterband eine heizbare Fläche vorzusehen, mit der das Filterband in Kontakt gebracht wird. Diese Kontaktfläche kann beispielsweise eine entsprechend dem Außenumfang der Trommel gekrümmte beheizte Metallfläche sein, an der das Filterband beim Umlauf um die Trommel anliegt, die eine aus einem nicht oder schlecht wärmeleitenden Material bestehende Trommelumfangswand aufweist.

Als besonders vorteilhaft hat es sich jedoch erwiesen, die Umfangsfläche der Trommel heizbar auszubilden. Dazu kann der Trommelmantel beispielsweise aus einem Metall, wie Aluminium, bestehen und in der Trommel vorzugsweise axial ein sogenanntes PTC (positive thermal coefficient)-Heizelement angeordnet sein, das bei einer vorgegebenen Temperatur selbstregelnd heizt. Derartige PTC werden im Kraftfahrzeugbau für die verschiedensten Zwecke eingesetzt.

Durch die Kontaktheizung wird die gesamte Desorptionsenergie erzeugt. Das heißt, es muß keine Luft zum Energieeintrag zugeführt werden. Der Desorptionszone braucht damit nur eine geringe Luftmenge zugeführt werden, und zwar ausschließlich zur Abfuhr des Desorbats aus der Desorptionszone. Durch die Kontaktheizung wird eine hervorragende Energiebilanz gewährleistet.

Die am Filterband anliegende aufheizbare Fläche zur thermischen Desorption der adsorbierten Schad- und Geruchsstoffe sollte dabei eine Temperatur von mindestens 100°C aufweisen, vorzugsweise von mindestens 150°C.

Die Desorptionsluft stellt vorzugsweise einen Teil, beispielsweise 0,5 bis 10 %, der Menge des Luftstroms dar, die aus der Vorrichtung gereinigt in Richtung des Fahrzeuginnenraumes austritt. Dazu ist der Luftdurchtrittsbereich vorzugsweise von der Desorptionszone durch eine Wandung getrennt, die eine Öffnung aufweist, durch die die entsprechende Luftmenge als Desorptionsluft der Desorptionszone zugeführt wird, um das Desorbat aus der Desorptionszone abzuführen.

Damit die Durchlässigkeit des Gewebes im wesentlichen unabhängig von der jeweiligen Ventilatorleistung, also dem Luftdurchsatz, ist, sind vorzugsweise Spannrollen vorgesehen, die sicherstellen, dass das Filterband auch bei hohem Luftdurchsatz gespannt bleibt. Zugleich wird durch die Spannrollen gewährleistet, dass die Öffnungen von dem Luftdurchtrittsbereich in die Desorptionszone zum Durchtritt der Desorptionsluft bei hohem Luftdurchsatz nicht durch Verformung des Filterbandes verschlossen werden. Auch kann eine der Trommeln als Spannrolle ausgebildet sein.

Die mit den desorbierten Schad- und Geruchsstoffen belastete Desorptionsluft wird bei einem Kraftfahrzeug mit Verbrennungsmotor vorzugsweise der Verbrennungsluft des Motors zugeführt. Auch können die Schad- und Geruchsstoffe in der Desorptionsluft durch eine thermische oder katalytische Nachverbrennung beseitigt werden, beispielsweise bei Elektrofahrzeugen. Gegegebenenfalls kann die Desorptionsluft auch nach außen abgegeben werden, beispielsweise bei Flugzeugen.

Das Filterband wird vorzugsweise direkt oder indirekt mit einem Elektromotor über eine Antriebsübertragungsrolle angetrieben. Dabei kann die Übertragungsrolle auch in eine der beiden Trommeln baulich integriert sein.

Die Umlaufgeschwindigkeit des Filterbandes wird vorzugsweise in Abhängigkeit vom Luftdurchsatz gesteuert. Dazu kann für den Ventilator und die Antriebstrommel die gleiche Steuerung vorgesehen sein. Zur Messung des Luftdurchsatzes kann auch eine Druckmeßdose vorgesehen sein.

Die erfindungsgemäße Vorrichtung dient sowohl zur Reinigung der Außenluft, die dem Fahrzeuginnenraum zugeführt wird, wie zur Reinigung der Umluft. Sie ist insbesondere innerhalb der Klimaanlage eines Kraftfahrzeuges vorgesehen, und zwar in Strömungsrichtung der zu reinigenden Luft vorzugsweise vor dem Verdampfer der Klimaanlage, da die Luft vor dem Verdampfer eine geringere relative Feuchte besitzt. Auch nimmt z.B. die Adsorptionskapazität von Kohlenstofffasern mit zunehmender relativer Feuchte ab.

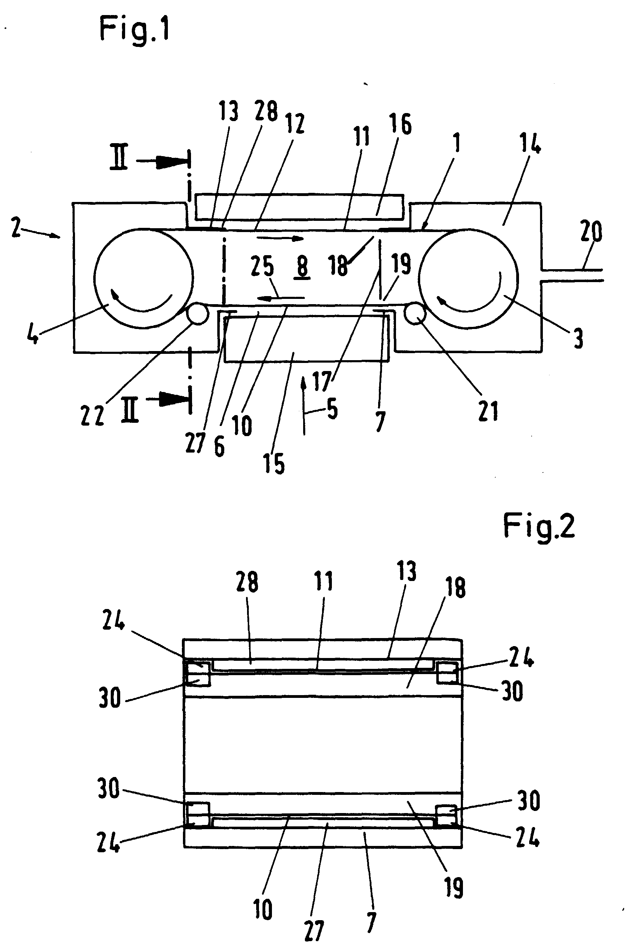

Nachstehend ist eine Ausführungsform der erfindungsgemäßen Vorrichtung anhand der Zeichnung beispielhaft näher erläutert. Darin zeigen jeweils schematisch
- Fig. 1: einen Längsschnitt durch die Vorrichtung;
- Fig. 2: einen Schnitt entlang der Linie II-II nach Figur 1;
- Fig. 3: perspektivisch die Ansicht einer anderen Ausführungsform der Umlenkrolle in der Desorptionszone und einen Teil des Filterbandes;
- Fig. 4: eine schematische Seitenansicht eines alternativen Vorlaufs des Filterbandes; und
- Fig. 5 bis 8: schematisch jeweils eine Seitenansicht verschiedener anderer Außengeometrien des Filterbandes.

Die Vorrichtung weist ein endloses Filterband 1 aus einem Kohlenstofffasergewebe auf, das in einem Gehäuse 2 über zwei parallele Trommeln 3, 4 umläuft. Eine der Trommeln 3, 4 ist als Antriebstrommel ausgebildet.

Zwischen den beiden Trommeln 3, 4 befindet sich der Luftdurchtrittsbereich 8. Die zu reinigende Luft tritt entsprechend dem Pfeil 5 durch die Öffnung 6 in der einen Gehäusewand 7 in das Gehäuse 2 ein, strömt durch die beiden Bandtrümmer 10, 11 und tritt dann durch die Öffnung 12 an der anderen Gehäusewand 13 aus dem Gehäuse 2 aus.

Zur Desorption der von dem Filterband 1 adsorbierten Schad- und Geruchsstoffe ist eine Desorptionszone oder -kammer 14 vorgesehen, in der die Trommel 3 angeordnet ist, deren Trommelmantel durch eine nicht dargestellte Heizung beheizbar ist. Das Gehäuse 2 ist, zumindest im Bereich der Desorptionszone 14, mit einer nicht dargestellten Wärmeisolierung versehen.

Vor der Öffnung 6 ist ein Vorfilter 15 angeordnet, das eine Zone bildet, in der vom Filterband 1 nicht adsorbierbare Schad- und Geruchsstoffe adsorbiert und/oder in vom Filterband 1 adsorbierbare Stoffe umgewandelt werden. Hinter der Öffnung 12 an der anderen Gehäusewand 13 ist ein Partikelfilter 16 angeordnet, das beispielsweise Abrieb im Luftstrom 5 zurückhält.

Der Luftdurchtrittsbereich 8 wird von der Desorptionskammer 14 durch eine Wandung 17 getrennt, wobei zwischen den Bandtrümmern 10, 11 und der Wandung 17 jeweils Öffnungen 18, 19 zum Eintritt von Desorptionsluft vom Luftdurchtrittsraum 8 in die Desorptionskammer 14 vorgesehen sind. An die Desorptionskammer 14 ist eine Leitung 20 angeschlossen, über die das Desorbat aus der Desorptionskammer 18 mit der Desorptionsluft abgeführt wird, beispielsweise zur Verbrennungsluft des Verbrennungsmotors eines Kraftfahrzeuges. Die Wandung 17 kann zur Einstellung der Größe der Öffnungen 18, 19 auch um eine zu den Trommelachsen parallele Achse verschwenkbar sein.

Beiderseits der Öffnung 6 sind Spannrollen 21, 22 vorgesehen, um die Bandtrümmer 10, 11 unabhängig vom Luftdurchsatz gespannt in ihrer Position zu halten.

Das umlaufende Band 1 ist an den beiden Längsseiten auf der nach außen gerichteten Seite mit einem Dichtelement 24 und auf der nach innen gerichteten Seite mit einem kraftübertragendem Element 30, z.B. einem Zahnriemen, eingefaßt.

Das Dichtelement 24 schließt im Luftdurchtrittsbereich der Öffnung 6 mit der Gehäusewand so ab, dass im Luftdurchtrittsbereich 8 ein Luftdurchtritt durch das umlaufende Band 1 erzwungen wird. Zusätzliche Dichtleisten 27, 28 unterdrücken einen Luftdurchtritt zwischen Band 1 und Gehäusewand in Richtung Desorptionszone.

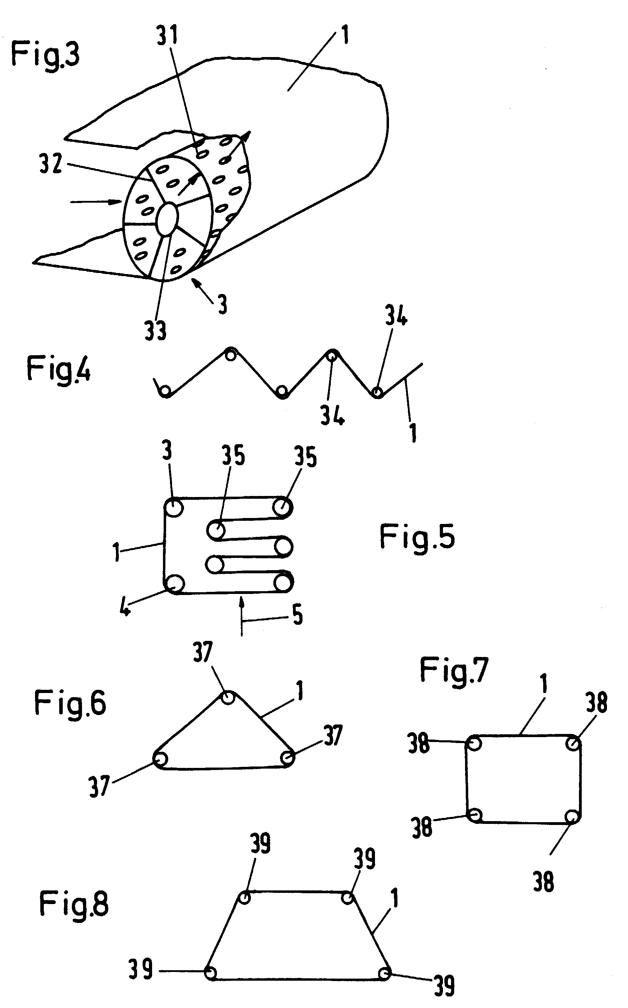

Gemäß Fig. 3 weist die Umlenk-Trommel 3 in der Desorptionskammer 14 einen als Sieb ausgebildeten Mantel 31 auf, der über radiale Halteelemente 32 an der Hohlwelle 33 befestigt ist, in der eine nicht dargestellte elektrische Heizung angeordnet ist. Die Desorptionsluft wird gemäß den Pfeilen 33 dadurch in der Trommel 3 erwärmt und tritt dann durch den Trommelmantel 31 in das Filterband 1.

Gemäß Fig. 4 weist das Filterband 1 zwischen den Umlenktrommeln 3, 4 durch entsprechende Umlenkrollen 34 einen zickzackförmigen Verlauf auf, um die Bandlänge zu vergrößern.

Bei der Anordnung nach Fig. 5 weist das Filterband 1 durch die Umlenkrollen 35 zwischen den Trommeln 3, 4 einen mäanderförmigen Verlauf auf, um die Anzahl der Lagen, die von der zu reinigenden Luft 5 durchströmt werden zu vergrößern.

Zu Fig. 6, 7 und 8 ist eine Dreieck-, Viereck- bzw. eine trapezförmige Anordnung des Filterbandes 1 mit entsprechenden Umlenkrollen 37, 38 bzw. 39 dargestellt. Damit kann das Filterband 1 beispielhaft dem jeweiligen Gehäuse bei optimaler Raumausnutzung angepaßt werden.

## Patentansprüche

1. Vorrichtung zur Beseitigung von Schad- und Geruchsstoffen aus einem einem Fahrzeuginnenraum zuzuführenden Luftstrom, mit einem endlosen, über wenigstens zwei parallele Trommeln umlaufenden Filterband als Adsorptionsmittel, einem Luftdurchtrittsbereich für den durch das Filterband zwischen den Trommeln hindurchtretenden Luftstrom und einer Desorptionszone zur thermischen Desorption der adsorbierten Schad- und Geruchsstoffe von dem Filterband, dadurch gekennzeichnet, dass stromaufwärts des Filterbandes (1) eine Zone (15) vorgesehen ist, in der vom Filterband (1) nicht adsorbierbare Schad- und Geruchsstoffe adsorbiert und/oder in vom Filterband (1) adsorbierbare Stoffe umgewandelt werden.

2. Vorrichtung nach Anspruch 1, dadurch gekennzeichnet, dass das Filterband (1) ein aus Kohlenstofffasern gebildetes textiles Material ist.

3. Vorrichtung nach Anspruch 2, dadurch gekennzeichnet, dass das textile Material aus Kohlenstofffasern durch Oxidation eines textilen Materials aus regenerierten Cellulosefasern gebildet ist.

4. Vorrichtung nach Anspruch 1, dadurch gekennzeichnet, dass die Zone (15) einen Oxidationskatalysator und/oder ein Oxidationsmittel enthält.

5. Vorrichtung nach Anspruch 1, dadurch gekennzeichnet, dass zur thermischen Desorption der adsorbierten Schad- und Geruchsstoffe von dem Filterband (1) eine am Filterband (1) anliegende heizbare Fläche vorgesehen ist.

6. Vorrichtung nach Anspruch 5, dadurch gekennzeichnet, dass die heizbare Fläche durch die Umfangsfläche der Trommel (3, 4) in der Desorptionszone (14) gebildet wird.

7. Vorrichtung nach einem der vorstehenden Ansprüche, dadurch gekennzeichnet, dass der Luftdurchtrittsbereich (8) von der Desorptionszone (14) durch eine Wandung (17) mit wenigstens einer Öffnung (18, 19) zum Durchtritt der das Desorbat aus der Desorptionszone (14) abtransportierenden Desorptionsluft getrennt ist.

8. Vorrichtung nach einem der vorstehenden Ansprüche, dadurch gekennzeichnet, dass bei einem Fahrzeug mit Verbrennungsmotor eine Leitung (20) vorgesehen ist, über die das Desorbat aus der Desorptionszone (14) der Verbrennungsluft des Verbrennungsmotors zugeführt wird.

9. Vorrichtung nach einem der vorstehenden Ansprüche, dadurch gekennzeichnet, dass wenigstens eine Spannrolle (21, 22) für das Filterband (1) vorgesehen und/oder wenigstens eine der Trommeln (3, 4) als Spannrolle ausgebildet ist.

10. Vorrichtung nach einem der vorstehenden Ansprüche, dadurch gekennzeichnet, dass die beiden Trommeln (3, 4) und das Filterband (1) in einem Gehäuse (2) angeordnet sind, das im Luftdurchtrittsbereich (8) Luftdurchtrittsöffnungen (6, 12) und zu dem einen bzw. anderen Trumm (10, 11) des Filterbandes (1) parallele Wandabschnitte (7, 13) aufweist, das Filterband (1) an seinen beiden Längsseiten auf seiner den parallelen Gehäusewandabschnitten (7, 13) zugewandten Außenseite mit einem Dichtband (24) versehen ist, das an dem benachbarten Gehäusewandabschnitt (7, 13) anliegt, und im Gehäuse (2) in Umlaufrichtung (25) des Filterbandes (1) vor und nach den Luftdurchtrittsöffnungen (6, 12) jeweils Dichtelemente (27, 28) vorgesehen sind, die einen Luftdurchtritt zwischen Filterband (1) und Gehäusewand in Richtung auf Trommeln (3, 4) unterdrücken.

11. Vorrichtung nach einem der vorstehenden Ansprüche, dadurch gekennzeichnet, dass an beiden Längsseiten des Filterbandes (1) an der Innenseite ein kraftübertragendes Element (30) vorgesehen ist, das mit wenigstens einer der Trommeln (3, 4) zusammenwirkt.
